# EUROPÄISCHE PATENTSCHRIFT

(11) **EP 1 680 201 B1**
(45) Veröffentlichungstag und Bekanntmachung des Hinweises auf die Patenterteilung: **02.05.2012**
(21) Anmeldenummer: 04765974.3
(22) Anmeldetag: 15.10.2004
(51) Int. Cl.: B01D 15/08, B01J 20/26

(54) **VERFAHREN ZUR HERSTELLUNG VON MONOLITHISCHEN FORMKÖRPERN**
METHOD FOR THE PRODUCTION OF MONOLITHIC MOLDED ELEMENTS
PROCEDE POUR PRODUIRE DES CORPS MOULES MONOLITHIQUES

(30) Priorität: 06.11.2003 DE 10351798
(43) Veröffentlichungstag der Anmeldung: 19.07.2006
(73) Patentinhaber: Merck Patent GmbH, 64293 Darmstadt (DE)
(72) Erfinder: CABRERA, Karin, 63303 Dreieich (DE); KNOELL, Peter, 64401 Gross-Bieberau (DE)
(86) Internationale Anmeldenummer: PCT/EP2004/011627
(87) Internationale Veröffentlichungsnummer: WO 2005/046834

(56) Entgegenhaltungen:
- US-A1- 2003 155 676
- US-B1- 6 210 570
- HUBER ET AL: "Preparation and evaluation of packed capillary columns for the separation of nucleic acids by ion-pair reversed-phase high-performance liquid chromatography" J. CHROMATOGRAPPHY A, Bd. 893, 2000, Seiten 23-35, XP004210371

## Beschreibung

Die Erfindung betrifft ein Verfahren zur Herstellung von monolithischen Formkörpern, wie Chromatographiesäulen oder Kapillaren mit monolithischen Sorbenzien, die nach der Herstellung direkt in ihrer Gelierform verbleiben können. Weiterhin betrifft die Erfindung Formkörper, wie Chromatographiesäulen oder Kapillaren mit monolithischen Sorbenzien, die nach dem erfindungsgemäßen Verfahren hergestellt wurden.

Monolithische Sorbenzien gewinnen im Bereich der Chromatographie, insbesondere der HPLC, Mikro-LC oder der Elektrochromatographie, immer mehr an Bedeutung. Sie zeigen wesentlich bessere Massentransporteigenschaften als Säulen oder Kapillaren mit partikulären Sorbenzien. Aus diesem Grund können Säulen mit monolithischen Sorbenzien mit höherer linearer Fließgeschwindigkeit bei gleichbleibender Leistung betrieben werden.

Monolithische Sorbenzien können auf Basis von organischen oder anorganischen Polymeren gebildet werden. Aufgrund der unterschiedlichen Eigenschaften der Polymere werden derzeit zur Herstellung von Chromatographiesäulen auf Basis von monolithischen Sorbenzien unterschiedliche Verfahren eingesetzt.

Polymere mit geringen Schrumpfungsraten, d.h. weiche Polymergele, können direkt in den zur Chromatographie verwendeten Rohren als Gelierform hergestellt werden. Hjerten et al. (Nature, 356, S. 810-811, 1992) beschreiben z.B. Monolithen aus einem Polyacrylamid-Material, die innerhalb eines chromatographischen Rohres hergestellt werden. Frechet et al. (Anal. Chem., 64, S. 820-822, 1992) beschreiben die Herstellung von Polyacrylat-Materialien und Polystyrol/Divinylbenzol Copolymeren, die in Anwesenheit von Porogenen zu monolithischen Materialien mit einer makroporösen Struktur werden und nach der Herstellung in der verwendeten Form verbleiben können.

Derartige Polymere weisen jedoch für die Chromatographie einige Nachteile auf. Beispielsweise besitzen sie häufig eine zu geringe mechanische Stabilität. Weiterhin ist die Porenverteilung der Materialien oft ungünstig, da zu viele Mikroporen auftreten. Dadurch wird die Effizienz und die Symmetrie der Säulen negativ beeinflußt. Auch zeigen die Materialien oft ein ungünstiges Quellverhalten.

Wesentlich bessere Trenneigenschaften zeigen monolithische poröse anorganische Formkörper oder, in einigen Fällen, stark quervernetzte, harte organische Polymergele. Diese Materialien schrumpfen jedoch während ihrer Herstellung, so daß sie nicht direkt in den Chromatographierohren hergestellt werden können. Das entstehende Totvolumen zwischen dem Formkörper und dem Chromatographierohr würde die Trennleistung zu stark herabsetzen. Bei anorganischen Monolithen, die über einen Sol-Gel Prozeß hergestellt werden, beträgt die Schrumpfung nach der Alterung beispielsweise bis zu 20% des Ausgangsdurchmessers. Daher müssen die Materialien nach ihrer Herstellung aus den Gelierformen entfernt werden und anschließend mit dicht-schließenden Rohren ummantelt werden.

Huber et al., J. Chromatography A, Bd. 893, 2000, Seiten 23-35 beschreibt die Herstellung von Kapillaren, die ein Styrol-Divinylbenzol Copolymer enthalten, wobei die Wand der fused silica Kapillare zuvor mit 3-(Trimethoxysilyl)propylmethacrylat aktiviert wurde.

US 6210570 offenbart die Herstellung von Kapillaren mit monolithischen Sorbenzien, wobei das Monomersol durch einen geringen Silica-Anteil geringere Schrumpfung zeigen soll. Weiterhin wird die kovalente Ankopplung an die Kapillarwand offenbart.

R. Swart et al. Trends in Analytical Chemistry Vol. 16, Nr. 6, 1997, Seiten 332-342 beschreibt die Herstellung von OT-Kapillaren, wobei die Oberfläche durch Anätzen aktiviert wird.

WO 99/38006 und WO 99/50654 offenbaren Verfahren zur Herstellung von Kapillaren, die mit monolithischem Silica-Material gefüllt sind. Dieses Material kann nach der Herstellung direkt in der Kapillare verbleiben. Jedoch sind die dort offenbarten Methoden nur zur Herstellung von Kapillarsäulen mit kleinerem Durchmesser geeignet.

Aufgabe der vorliegenden Erfindung war es daher, ein Verfahren zur Herstellung von monolithischen Chromatographiesäulen bereitzustellen, bei dem das Sorbens nach der Herstellung in der Gelierform, d.h. dem Säulenrohr, verbleiben kann. Das Verfahren sollte insbesondere für anorganische Materialien geeignet sein und das Füllen von Säulenrohren mit einem Durchmesser zwischen 0,05 mm und 100 mm ermöglichen.

Es wurde gefunden, daß monolithische Formkörper in ihrer Gelierform hergestellt werden können, ohne dass durch Schrumpfung ein Totvolumen zwischen Formkörper und Gelierform entsteht, wenn die innere Oberfläche der Gelierform vor der Synthese aktiviert wird. Geeignete Aktivierungsverfahren sind z.B. Anätzen, Vergrößerung oder chemische Modifikation der inneren Oberfläche der Gelierform. Auf diese Weise kann der Monolith in der ursprünglichen Gelierform verbleiben und direkt zur chromatographischen Trennung eingesetzt werden.

Gegenstand der vorliegenden Erfindung ist daher ein Verfahren zur Herstellung von monolithischen porösen Formkörpern, die ihre Gelierform vollständig ausfüllen, gekennzeichnet durch die Verfahrensschritte gemäß Anspruch 1.

In einer weiteren bevorzugten Ausführungsform erfolgt in Schritt b) die Aktivierung durch Vergrößerung der Innenoberfläche der Gelierform, indem die Innenoberfläche mit Alkoxysilanen und/oder Organoalkoxysilanen und/oder Aufschlämmungen von Partikeln behandelt wird.

Gegenstand der vorliegenden Erfindung sind auch monolithische poröse Formkörper, die in ihre Gelierform einpolymerisiert sind, herstellbar nach dem erfindungsgemäßen Verfahren.

Gegenstand der vorliegenden Erfindung ist die Verwendung der erfindungsgemäßen Formkörper in der Gelierform zur chromatographischen Auftrennung mindestens zweier Substanzen.

Zur Herstellung der Formkörper können verschiedene dem Fachmann bekannte Verfahren, wie Verfahren zur z.B. radikalischen Polymerisation oder auch Sol-Gel-Verfahren, eingesetzt werden. Die Lösungen, die die Ausgangssubstanzen zur Herstellung der Monolithen enthalten, werden erfindungsgemäß, unabhängig von der Art wie sie polymerisiert oder geliert werden, als Monomersol bezeichnet.

Das erfindungsgemäße Verfahren eignet sich insbesondere zur Herstellung anorganischer poröser monolithischer Formkörper nach einem Sol-Gel Prozeß. In WO 95/03256 und besonders in WO 98/29350 werden erfindungsgemäß bevorzugte Verfahren zur Herstellung anorganischer monolithischer Formkörper nach einem Sol-Gel Prozeß offenbart. Diese Materialien enthalten Mesoporen mit einem Durchmesser zwischen 2 und 100 nm und Makroporen mit einem mittleren Durchmesser von über 0,1 µm und sind somit für eine chromatographische Anwendung besonders gut geeignet.

Das erfindungsgemäße Verfahren eignet sich auch zur Herstellung von Materialien mit anderer Porenverteilung. Beispielsweise können auch Materialien mit monomodaler Porenverteilung erzeugt werden, z.B. Materialien mit einem mittleren Porendurchmesser zwischen 10 nm und 200 nm.

Die Herstellung der Formkörper kann beispielsweise erfolgen, indem man in einer Gelierform Alkoxysilane unter sauren Bedingungen in Gegenwart einer porenbildenden Phase, z.B. einer wässrigen Lösung eines organischen Polymers, zu einem porösen Gelkörper hydrolysiert und polykondensiert. Danach wird das Gel gealtert und schließlich die porenbildene Substanz abgetrennt. Ohne die erfindungsgemäße Behandlung der Gelierform kommt es durch die Polymerisation bzw. Polykondensation zu einer Veränderung der Gelstruktur und zum Schrumpfen des Gels. Dadurch entsteht bei den Verfahren nach dem Stand der Technik ein Totvolumen zwischen der Gelierform und dem Formkörper.

Je nach der Art der eingesetzten Monomere und gegebenenfalls Porenbildner kann die konkrete Durchführung des erfindungsgemäßen Verfahrens variieren. Beispielsweise kann z.B. beim Einsatz von Organoalkoxysilanen auf den Einsatz eines zusätzlichen Mesoporenbildners (z.B. Harnstoff) verzichtet werden. In derartigen Fällen kann häufig nicht zwischen einem Gelierschritt und einem unabhängig davon durchgeführten Alterungsschritt unterschieden werden, da die Alterung schon während des Gelierschrittes erfolgt. Erfindunggemäß bedeutet daher "Polymerisieren des Monomersols und Altem des entstandenen Gels zur Bildung von Poren", dass Gelieren und Altem nacheinander z.B. unter unterschiedlichen Temperaturbedingungen erfolgen können oder auch quasi parallel, indem nach den Gelierungsbedingungen keine weiteren Änderungen der Reaktionsbedingungen erfolgen und somit auch kein gesondert erkennbarer Alterungsschritt durchgeführt wird.

Als Gelierform wird erfindungsgemäß die Form bezeichnet, in die die monolithischen Formkörper während der erfindungsgemäßen Herstellung vollständig, d.h. paßgenau ohne Totvolumen, einpolymerisiert werden. Da die erfindungsgemäß einpolymerisierten Formkörper bevorzugt als Trennsäulen für die Chromatographie eingesetzt werden, stellt die Gelierform zugleich die Ummantelung der Chromatographiesäule dar. Es ist erfindungsgemäß nicht mehr notwendig, die Formkörper für einen chromatographischen Einsatz aus der Gelierform zu entfernen und mit einer neuen Ummantelung zu versehen. Die Gelierform besitzt daher typischerweise eine für Kapillaren, analytische oder präparative Chromatographiesäulen übliche Größe und Form.

Genauso kann die Gelierform für andere Anwendungen auch andere Formen, z.B. Kegelform oder Quaderform besitzen. Beispielsweise ist das erfindungsgemäße Verfahren auch geeignet, monolithische Formkörper für den Einsatz in SPE (Solid Phase Extraction) oder SPME (Solid Phase Microextraction) oder generell zur Probenvorbereitung bereitzustellen. In diesem Fall ist die Gelierform beispielsweise eine Kartusche oder Pipettenspitze.

Die Gelierform ist aus Glas, mit Glas beschichtetem Edelstahl oder Fused Silica. Der Fachmann ist in der Lage, die Auswahl aus diesen Materialien aufgrund der geplanten Anwendung, der

Bedingungen für die Aktivierung der Oberfläche der Gelierform, der Reaktionsbedingungen und der eingesetzten Reaktanden zu treffen.

Erfindungsgemäß bedeutet vollständig, d.h. paßgenau ohne Totvolumen einpolymerisiert, daß die Gelierform derart von dem Formkörper ausgefüllt wird, daß die chromatographische Trennleistung nicht mehr von Hohlräumen beeinträchtigt wird, die in den Randbereichen zwischen monolithischem Formkörper und Gelierform durch Schrumpfungsprozesse entstehen.

Das erfindungsgemäße Verfahren wird zur Herstellung von Chromatographiesäulen mit Innendurchmessern von 50 µm bis 100 mm, bevorzugt zwischen 0.5 mm bis 50 mm, eingesetzt

Durch die erfindungsgemäße Aktivierung der Innenoberfläche der Gelierform wird der Kontakt zwischen dem Monomersol bzw. dem entstehenden monolithischen Formkörper und der Oberfläche der Gelierform intensiviert. Bevorzugt erfolgt dies durch verstärkte Ausbildung von chemischen Bindungen zwischen Formkörper und Gelierform. Es wurde gefunden, dass verschiedene Arten der Aktivierung der Oberfläche der Gelierform geeignet sind. Welche Art der Aktivierung für die jeweilige Synthese geeignet ist, hängt vom Material der Gelierform und der Zusammensetzung des Monomersols ab.

### 1. Anätzen

Dieses Verfahren ist insbesondere für Gelierformen aus Keramik, Glas oder anderen Materialien auf Silica-Basis oder für Formen, die mit derartigen Materialien beschichtet sind, geeignet. Hierbei wird zumindest die Innenoberfläche der Gelierformen mit starken Säuren oder starken Basen angeätzt. Auf diese Weise entstehen z.B. vermehrt aktivierte Silanolgruppen an der Innenoberfläche der Form, die mit dem Monomersol reagieren können. Desweiteren kommt es mit starken Basen zu einer partiellen Anlösung der Silikatstruktur des Glases, die eine Oberflächenvergrösserung zur Folge hat.

Als starke Säuren oder Basen sind z.B. HF, HCl, HNO₃ oder H₂SO₄, NaOH, KOH, NH₄OH, bevorzugt HF und HCl bzw. NaOH, geeignet. Die Dauer der Behandlung hängt vom Material der Gelierform ab. In der Regel werden die Formen bei Temperaturen zwischen 25°C und 80 °C zwischen 5 Minuten und 24 Stunden behandelt. Die Behandlung kann durch Eintauchen der gesamten Form oder Spülen bzw. Befüllen des Inneren der Gelierform erfolgen. Abschließend wird bei Verwendung einer Base mit verdünnter Säure (zur Neutralisation), mit Wasser und schließlich mit einem organischen Lösungsmittel, wie z.B. Ethanol gespült bzw. im Falle der Säure mit Wasser und einem organischen Lösungsmittel gespült und die Form mit Monomersol befüllt.

### 2. Vergrößerung der Oberfläche

Eine weitere sehr effektive Methode zur erfindungsgemäßen Herstellung von monolithischen Chromatographiesäulen ist die Vergrößerung der Innenoberfläche der Gelierform.

Hierbei wird die Gelierform mit einer Lösung oder Aufschlämmung vorbehandelt. Die Lösung besteht aus einem Monomersol ähnlich dem, das später zur Bildung des monolithischen Formkörpers verwendet wird, d.h. es enthält ebenso wie das Monomersol Alkoxysilane. Diese Alkoxysilane können mit der Innenoberfläche der Gelierform reagieren und dort auspolymerisiert und/oder aufgesintert werden. Auf diese Weise bildet sich eine Beschichtung der Innenoberfläche der Gelierform, die durch ihren Aufbau und ihre Struktur die Innenoberfläche vergrößert. Geeignete Alkoxysilane sind Tetraalkoxysilane (RO)₄Si, wobei R ein C1 bis C20 Alkyl, C2 bis C20 Alkenyl oder C5 bis C20 Aryl, bevorzugt ein C1 bis C8 Alkylrest ist. Besonders bevorzugt sind Tetraethoxy- und insbesondere Tetramethoxysilan. Genauso kann das Tetraalkoxysilan verschiedene Alkylreste enthalten.

In einer anderen Ausführungsform können statt eines Alkoxysilans oder Mischungen zweier oder mehrerer Alkoxysilane Organoalkoxysilane oder Mischungen von Organoalkoxysilanen mit Tetraalkoxysilanen eingesetzt werden. Geeignete Organoalkoxysilane sind solche, in denen eine Alkoxygruppe eines Tetraalkoxysilans durch C1 bis C20 Alkyl, C2 bis C20 Alkenyl oder C5 bis C20 Aryl ersetzt ist. Beispiele geeigneter Organoalkoxysilane sind z.B. in WO 03/014450 oder US 4,017,528 offenbart. Statt in ihrer monomeren Form können die Alkoxysilane bzw. Organoalkoxysilane auch vorpolymerisiert als z.B. Oligomere eingesetzt werden.

Die Tetraalkoxysilane bzw. Organoalkoxysilane werden typischerweise als 2 bis 25%ige, bevorzugt 5 bis 10%ige (Gew.%) Lösung in einem organischen Lösungsmittel wie z.B. Toluol eingesetzt. Die Behandlung der Gelierform erfolgt bevorzugt bei erhöhter Temperatur zwischen 50 und 150°C, z.B. wird in Toluol unter Rückfluß gekocht. Die Dauer der Behandlung beträgt in der Regel zwischen 1 bis 40 Stunden, typischerweise 10 bis 25 Stunden.

In einer anderen bevorzugten Ausführungsform enthält die Lösung zusätzlich Partikel und ist somit eine Partikelsuspension bzw. Aufschlämmung. Die Partikel haben typischerweise einen Durchmesser zwischen 25 nm und 10 µm, bevorzugt zwischen 50 nm und 1µm und bestehen aus Silica. Bevorzugt besitzen sie eine hydrophile Oberfläche. Aber auch hydrophob derivatisierte Partikel, z.B. mit C1 - C20 Akylresten sind besonders geeignet, wenn das Monomersol aus Organoalkoxysilanen und oder Mischungen von Organoalkoxysilanen mit Alkoxysilanen besteht. Hier findet bedingt durch hydrophobe Wechselwirkungen die Polymerisation zu Beginn bevorzugt an der Innenoberfläche statt.

Die Partikel können unporös oder porös sein. Geeignet sind sphärische oder auch unregelmässig geformte Partikel. Besonders bevorzugt sind Silica-Partikel mit einem Durchmesser zwischen 50nm und 1 µm.

In der Regel werden die Gelierformen bei Temperaturen zwischen 25°C und 100° C zwischen 1 und 24 Stunden mit der Lösung oder Aufschlämmung behandelt. Die Behandlung kann durch Eintauchen der gesamten Form oder Spülen bzw. Befüllen des Inneren der Gelierform erfolgen. Anschließend werden die Gelierformen aus der Partikelsuspension bzw. Aufschlämmung genommen und ohne weitere Behandlung über mehrere Stunden getrocknet.

Falls gewünscht bzw. für die spätere Anwendung notwendig, können die Gelierformen noch erhitzt werden. Bei einer Beschichtung mit Tetraalkoxysilanen bzw. rein anorganischen Partikeln kann bis 600°C calziniert werden. Falls Organoalkoxysilane oder Partikel mit organischen Bestandteilen eingesetzt wurden, sollten die Temperaturen zwischen 100 und 300°C liegen, es sei denn die organischen Reste sollen ausgebrannt werden.

### 3. chemische Modifikation

Hierbei wird die innere Oberfläche der Gelierform mit Reagenzien behandelt, die zumindest zwei, bevorzugt drei oder vier, Funktionalitäten aufweisen. Erfindungsgemäß werden geeignete Reagenzien mit mindestens zwei Funktionalitäten als bifunktionelle Reagenzien bezeichnet. Es wird angenommen, dass die Verminderung des Schrumpfens nach Behandlung der Oberfläche mit diesen Reagenzien daher rührt, dass mindestens eine Funktionalität mit der Oberfläche der Gelierform reagiert und mindestens eine Funktionalität zur Reaktion mit dem Monomersol zur Verfügung steht.

Erfindungsgemäβ sind
- bis-funktionelle Silane der Formel I

   (RO)₁₋₃-Si-(CH₂)n-Si-(OR)₁₋₃ I

   wobei R C1 bis C20 Alkyl, C2 bis C20 Alkenyl oder C5 bis C20 Aryl, bevorzugt ein C1 bis C8 Alkylrest und
   n 1 bis 8 ist.

Beispiele für bevorzugte Verbindungen sind BTME (Bis(trimethoxysilyl) ethan mit R = Methyl und n = 2)), Bis(triethoxysilyl)ethan, Bis(triethoxysilyl)methan und Bis(triethoxysilyl)octan.
- mono, di- oder trifunktionelle Alkoxysilane mit einer vierten endständigen Funktion der Formel II

   (RO)ₙR'ₘSi-R* II

   wobei R und R' unabhängig voneinander ein C1 bis C8 Alkylrest sind, und R* eine Amino- oder eine Epoxy-Gruppe aufweist. Das heißt, R* ist z.B. Alkylamino, Alkenylamino oder Arylamino, bevorzugt ein C1 bis C8 Alkylamino oder Glycidoxyalkyl, Glycidoxyalkenyl oder Glycidoxyaryl, bevorzugt C1 bis C8-Glycidoxyalkyl. m ist 0, 1 oder 2, n + m ergibt 3. Beispiele für geeignete Verbindungen der Formel II sind 3-Glycidoxypropyltrimethoxysilan, 3-Glycidoxypropylmethyldimethoxysilan oder 3-Glycidoxypropylmethyldiethoxysilan sowie 3-Aminopropylmethyldiethoxysilan, 3-Aminopropyldimethylethoxysilan oder bevorzugt 3-Aminopropyltriethoxysilan oder 3-Aminopropyltrimethoxysilan.

Die bifunktionellen Reagenzien werden typischerweise als 2 bis 25%ige, bevorzugt 5 bis 10%ige (Gew.%) Lösung in einem organischen Lösungsmittel wie z.B. Toluol eingesetzt. Die Behandlung der Gelierform erfolgt bevorzugt bei erhöhter Temperatur zwischen 50 und 150°C; z.B. wird in Toluol unter Rückfluß gekocht. Die Dauer der Behandlung beträgt in der Regel zwischen 1 bis 40 Stunden, typischerweise 10 bis 25 Stunden. Die Behandlung kann durch Eintauchen der gesamten Form oder Spülen bzw. Befüllen des Inneren der Gelierform erfolgen. Zum Abschluß wird mit einem organischen Lösungsmittel gespült und die Form mit Monomersol befüllt.

Weiterhin ist es möglich, die genannten Möglichkeiten der Oberflächenaktivierung zu kombinieren. Beispielsweise kann es vorteilhaft sein, zunächst die Oberfläche der Gelierform durch Anätzen zu aktivieren und anschließend zusätzlich durch Behandlung mit Alkoxysilanen, bifunktionellen Reagenzien oder Partikel-Aufschlämmungen zu vergrößern.

In einer bevorzugten Ausführungsform wird das erfindungsgemäße Verfahren zur Herstellung von monolithischen Formkörpern in der Gelierform noch durch die Wahl des Monomersols unterstützt.

Eine weitere Möglichkeit, das Schrumpfen der Formkörper während ihrer Herstellung zu verringern oder zu unterdrücken, ist die Wahl einer bestimmten Zusammensetzung des Monomersols. Beispielsweise wurde gefunden, dass der Zusatz von Partikeln zu dem Monomersol die Schrumpfungsrate stark vermindert.

Dabei entsprechen die,verwendeten Monomersole ansonsten den aus dem Stand der Technik bekannten Monomersolen (z.B. aus US 5,869,152, WO 95/03256 und besonders in WO 98/29350).

In der japanischen Offenlegungsschrift JP(A) 2002-293657 wird der Zusatz von Partikeln bei Sol-Gel Verfahren zur Herstellung poröser Formkörper offenbart. Hier ist jedoch das Ziel des Partikel-Zusatzes die Verminderung des Energie-Aufwandes bei der Herstellung. Es gibt keinen Hinweis darauf, dass ein ähnliches Prinzip unter bestimmten Voraussetzungen auch dazu verwendet werden kann, die Schrumpfungsrate der Formkörper bei der Alterung zu verringern.

Im Gegensatz zu JP(A) 2002-293657 werden bei der vorliegenden Erfindung bevorzugt Silica-Partikel verwendet, die in Folge ihrer chemischen Struktur auch eine chemische Bindung mit dem Monomersol eingehen können. In JP(A) 2002-293657 werden dagegen z.B. Aluminiumoxidpartikel über einen Sol-Gel Prozess mit Alkoxysilanen einpolymerisiert, d.h. hier liegt nur ein Einschluss von Partikeln vor aber keine chemische Bindung mit dem Silikatnetzwerk.

Desweiteren werden die Partikel im Gegensatz zu JP(A) 2002-293657 bevorzugt zu einem späteren Zeitpunkt zugeführt, nämlich dann, wenn die Hydrolyse und Polykondensation des Monomersols bereits ca. 5 - 120 Minuten bevorzugt 15 - 45 Minuten stattgefunden hat. Zu diesem Zeitpunkt gibt es schon Oligomere bzw. ein lockeres Netzwerk bestehend aus SiO₂ in das die Partikel dann eingebaut werden und wegen ihrer rigiden Eigenschaften das Netzwerk mechanisch stabilisieren. Es wurde gefunden, dass bei einer erfindungsgemäß bevorzugten Zugabe im vorpolymerisierten Zustand des Monomersols die dann zugesetzten Teilchen besser verteilt und suspendiert werden. Zudem bewirkt diese Verfahrensführung, dass die Makroporengrösse von der Partikelzugabe weitgehend unbeeinflusst bleibt.

In dem Verfahren nach JP(A) 2002-293657 zeigt sich eine Abhängigkeit der Makroporengrösse von der Menge der zugesetzten Teilchen, z.B. bei 0.25g Aluminiumoxidteilchen eine Makroporengrösse von 1µm bzw. bei 0.5g derselben Partikel eine Grösse von 0.7 µm.

Durch die erfindungsgemäße Syntheseführung dagegen bleibt die Makroporengrösse weitgehend unbeeinflusst. Beispielsweise wird die Makroporengröße bei Partikel-Mengen von bis zu 1g (auf 50 ml Tetramethoxysilan) nicht verändert.

Es wurde gefunden, dass der oben beschriebene Zusatz von Partikeln die Schrumpfungsrate effektiv verringert. Werden beispielsweise einem Monomersol enthaltend 50 ml Tetramethoxysilan (TMOS) verschiedene Mengen von Partikeln mit einem Durchmesser von 50 nm (Aerosil 50 nm) zugesetzt, ergibt sich folgender Effekt auf die Schrumpfungsrate:

| | | | | |
|---|---|---|---|---|
| Partikelmenge pro 50 ml TMOS [g] | 1 | 2 | 3 | 5 |
| Schrumpfungsrate [%] | 16,7 | 13,4 | 11,7 | 8,4 |

Bei Zugabe von 15 bis 20 g poröser sphärischer Silika-Partikel mit einem Durchmesser von 0,1 bis 3 µm (pro 50 ml TMOS) kann die Schrumpfung nahezu vollständig unterdrückt werden (analog Beispiel 1).

REM-Aufnahmen von Formkörpern, die durch Zugabe von Partikeln zum Monomersol hergestellt wurden, zeigen, dass kleinere Partikel (50 bis 250 nm) vollständig in das Silika-Gerüst eingebaut werden und keinen sichtbaren Effekt auf die Beschaffenheit und Form des Gerüstes haben. Dagegen zeigt sich bei Verwendung von Partikeln mit einem Durchmesser von 0.1 bis 3 µm eine Veränderung der Oberflächenstruktur. Die Oberfläche erscheint durch die einpolymerisierten Partikel aufgerauht; es sind deutlich Partikel in der REM-Aufnahme zu erkennen.

Eine weitere Möglichkeit, zur Verminderung der Schrumpfungsrate bei der Herstellung von monolithischen Formkörpern insbesondere nach Sol-Gel Verfahren ist der Zusatz von Fasern. Fasern sind erfindungsgemäß länglich geformte Strukturen, deren Länge zumindest 5 mal größer ist als ihr mittlerer Durchmesser. Die Fasern können im Durchmesser rund, oval, unregelmäßig geformt oder auch flach sein. Geeignete Fasern sind Mineralfasern oder Chemiefasern, wie insbesondere Glaskeramik- oder besonders bevorzugt Glasfasern. Es wurde gefunden, dass bei Zugabe von Fasern eine effektive Stabilisierung des Gels bzw. des monolithischen Formkörpers erfolgt und so die Schrumpfung stark verringert wird. Dieses Verfahren ist auch besonders gut geeignet zur Herstellung von Formkörpern mit größeren Durchmessern (> 3 mm). Die Fasern werden dem Monomersol in Mengen zwischen 1 und 50 Gew.%, bevorzugt 2-30% zugesetzt. Durch die Wahl der Fasern (z.B. Glasfasern mit einer Länge von 0,1-5mm (bevorzugt 0,3-3mm) und einem Durchmesser von 1-25 µm (bevorzugt 5-10 µm)) kann die stabilisierende Wirkung angepasst werden. Beispielsweise kann es vorteilhaft sein, für Formkörper mit größeren Durchmessern lange Fasern (Länge > 3 mm) zu wählen oder eine Kombination aus langen und kürzeren Fasern.

Es wurde weiter gefunden, dass die Schrumpfungsrate bei der Herstellung monolithischer Formkörper verringert werden kann, wenn das Monomersol nicht nur Alkoxysilane sondern auch zumindest 10%, bevorzugt 20 bis 100% Organoalkoxysilane enthält.

Organoalkoxysilane sind Silane, in denen ein bis drei Alkoxygruppen, bevorzugt eine Alkoxygruppe, eines Tetraalkoxysilans durch organische Reste, wie bevorzugt C1 bis C20 Alkyl, C2 bis C20 Alkenyl oder C5 bis C20 Aryl, besonders bevorzugt C1 bis C8 Alkyl, ersetzt sind. Weitere Organoalkoxysilane sind z.B. in WO 03/014450 oder US 4,017,528 offenbart. Diese Dokumente offenbaren zudem die Herstellung von Partikeln bzw. monolithischen Formkörpern aus Organoalkoxysilanen. Es findet sich jedoch kein Hinweis darauf, dass die Verwendung von Organoalkoxysilanen eine Reduktion der Schrumpfung bei der Alterung mit sich bringt.

Die weiteren Bestandteile des Monomersols entsprechen in der Regel denen des Standes der Technik. Es kann jedoch möglich sein, dass die Konzentration bestimmter Stoffe leicht variiert werden muss, da Organoalkoxysilane eine andere Polarität, Reaktivität oder auch Löslichkeit zeigen als Alkoxysilane und so beispielsweise die Phasentrennung bzw. die Ausbildung des Gelkörpers beeinflussen. So kann es beispielsweise vorteilhaft sein, dem Monomersol ein mit Wasser mischbares organisches Lösungsmittel zuzusetzen, um diese Effekte auszugleichen. Geeignet sind z.B. Ethanol oder bevorzugt Methanol, wobei das molare Verhältnis von Wasser zu Lösungsmittel typischerweise zwischen 10:1 und 1:5, bevorzugt zwischen 3:1 und 1:2 liegt.

Weiterhin hat es sich als vorteilhaft erwiesen, wenn dem Monomersol zur Hydrolyse statt üblicherweise Essigsäure eine stärkere Säure zugesetzt wird. Besonders geeignet ist 1 M HNO₃.

Bei der Verwendung von Organoalkoxysilanen kann weiterhin je nachdem welche Porenverteilung der monolithische Formkörper aufweisen soll, auf verschiedene Weise auf die Ausbildung der Poren Einfluß genommen werden.

Beispielsweise kann gegebenenfalls auf die Zugabe eines Porogens wie z.B. Polyethylenglycol verzichtet werden, da Organoalkoxysilane durch die organischen, nicht hydrolysierbaren Reste selbst die Ausbildung von makroporösen Strukturen im Formkörper bewirken.

Werden zusätzlich Mesoporen gewünscht, so kann ein Detergenz zugegeben werden (z.B. kationische Detergentien wie CTAB (CH₃(CH₂)₁₅N⁺(CH₃)₃Br⁻), nicht ionische Detergentien wie PEG (Polyethylenglykol), Brij 56 (CH₃(CH₂)₁₅-(OCH₂CH₂)₁₀-OH), Brij 58 (CH₃(CH₂)₁₅-(OCH₂CH₂)₂₀-OH) und Triton^{®} X-Detergentien (CH₃)₃CCH₂CH(CH₃)-C₆H₄O(CH₂CH₂O)ₓH mit x=8 (TX-114) oder x=10 (TX-100) oder Blockcopolymere wie Pluronic^{®} P-123 (EO)₂₀(propylene oxide, PO)₇₀(EO)₂₀ oder Tween^{®} 85 (Polyoxyethylene sorbitan trioleate)) oder aber ein Alterungsverfahren durchgeführt werden wie z.B. in WO 95/03256 und besonders in WO 98/29350 (Zugabe einer thermisch zersetzbaren Substanz wie Harnstoff) offenbart. Auch die Zugabe von hydrophilen oder hydrophoben Partikeln wie oben beschrieben ist möglich.

Unabhängig von der Art der Aktivierung der Oberfläche der Gelierform oder des verwendeten Monomersols wird nach dem Ausgelieren und dem Altern des Gel häufig ein Calzinierungsschritt durchgeführt. Dadurch werden alle im Formkörper verbliebenen organischen Verbindungen oder Reste entfernt. Auch bei dem Einsatz von Organoalkoxysilanen im Monomersol kann im letzten Syntheseschritt calziniert werden, so dass die organischen Reste aus dem Formkörper entfernt werden und ein komplett anorganischer Formkörper erhalten wird. Insbesondere bei der Verwendung von Organoalkoxysilanen mit sterisch großen organischen Resten kann dies zur Erzeugung von Poren genutzt werden. Die Calzinierung erfolgt in der Regel bei Temperaturen zwischen 300 und 600°C. Genauso ist es aber auch möglich, auf den Calzinierungsschritt zu verzichten oder aber die Temperatur so zu wählen, dass die organischen Reste nicht angegriffen werden. Auf diese Weise besteht die Möglichkeit, durch die organischen Reste die Materialeigenschaften der Formkörper z.B. bezüglich ihrer chromatographischen Trenneigenschaften zu beeinflussen. Typischerweise liegen die Temperaturen in diesem Fall zwischen 100 und 300°C.

Die folgende Tabelle II zeigt, dass die Verwendung von Organoalkoxysilanen eine wirksame Methode zur Verringerung der Schrumpfungsrate ist. Je höher der Anteil von Methyltrimethoxysilan (MTMS) desto geringer ist die Schrumpfungsrate. Die Synthese erfolgte analog der Beispiele 1 und 3.

| | | | |
|---|---|---|---|
| Zusammensetzung | 100% TMOS | TMOS/MTMS 2:1 | 100% MTMS |
| Schrumpfung [%] | 25 | 12 | 0 |

Da jedoch die Verwendung von Organoalkoxysilanen die Stabilität und Porosität der Formkörper beeinflusst, kann es für bestimmte Anwendungen z.B. vorteilhaft sein, nicht nur Organoalkoxysilane sondern Mischungen aus Alkoxysilanen und Organoalkoxysilanen zu verwenden. Dann kann gegebenenfalls eine erfindungsgemäße Behandlung der Gelierform zusätzlich die Schrumpfung verringern.

Besonders bevorzugt werden einem Monomersol, das Organoalkoxysilane enthält, zusätzlich Partikel oder Fasern zugesetzt.

Besonders vorteilhaft ist erfindungsgemäß die Kombination der Aktivierung der Oberfläche der Gelierform mit einer oder mehrerer der genannten besonderen Zusammenstellungen des Monomersols, d.h. Zusatz von Partikeln, Zusatz von Fasern und/oder Verwendung von Organoalkoxysilanen.

In einer bevorzugten Ausführungsform wird eine Gelierform zunächst durch Anätzen aktiviert und dann mit einem Gemisch aus einem Organoalkoxysilan (z.B. MTMS), einem Detgergenz, einer Säure (z.B. verdünnte Salpetersäure) und Methanol befüllt. Nach der Gelierung und parallelen Alterung bei erhöhter Temperatur erhält man ein für die Chromatographie gut geeignetes Sorbens.

In der Regel werden die Formkörper nach der Alterung bzw. Calzinierung für den Einsatz in der Chromatographie zusätzlich mit Separationseffektoren versehen. Die verschiedenen Separationeffektoren und Methoden zu ihrer Einführung sind dem Fachmann bekannt. Beispiele finden sich z.B. in WO 98/29350.

Mithilfe des erfindungsgemäßen Verfahrens können monolithische homogene poröse Formkörper hergestellt werden, die ihre Gelierform vollständig ausfüllen. Die Formkörper können für chromatographische Zwecke in der Gelierform verbleiben und zeigen eine ebenso homogene Porenstruktur und ebenso gute Trennleistungen wie nachträglich ummantelte Formkörper. Durch das erfindungsgemäße Verfahren wird daher die Herstellung der monolithischen Formkörper stark vereinfacht.

Kapillaren, die nach dem erfindungsgemäßen Verfahren hergestellt werden, zeigen im Durchschnitt wesentlich bessere Trennleistungen als Kapillaren aus dem Stand der Technik. Grund dafür ist, daß durch Schrumpfungsprozesse unmerklich auftretende Totvolumina bei dem erfindungsgemäßen Verfahren noch effektiver verhindert werden.

Gegenstand der vorliegenden Erfindung sind demnach auch monolithische poröse Formkörper, die in ihre Gelierform einpolymerisiert sind, herstellbar nach dem erfindungsgemäßen Verfahren mittels Aktivierung der Oberfläche der Gelierform und/oder Zusatz von Partikeln, Fasern oder Organoalkoxysilanen zum Monomersol. Die erfindungsgemäßen Formkörper zeichnen sich durch eine über den gesamten Querschnitt homogene Struktur aus. Weiterhin bilden sich durch die Aktivierung der Innenoberfläche der Gelierform chemische Bindungen zwischen dem Formkörper und der Gelierform aus, die eine besonders effektive Stabilisierung bewirken.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Beispiel 1

In ein Reaktionsgefäss werden 100ml 0.01 N Essigsäure vorgelegt und unter Rühren 10.2g PEG (Polyethylenglykol zur Bildung der makroporösen Struktur) gelöst. Danach werden 9.0g Hamstoff dazugegeben, welches später durch Bildung von NH₄OH Mesoporen auf der Oberfläche des Silikats verursacht. Die Lösung wird im Eisbad auf 4°C gekühlt Beim Erreichen von 4°C werden 50ml TMOS unter Rühren zugegeben. Die Lösung wird weitere 30 Minuten bei 4°C gerührt. Anschließend wird die Lösung in einem Wasserbad auf 30°C erwärmt. Nach ca. 30 Minuten werden 15g sphärische, poröse Silikapartikel mit einer Größe von 0.1 - 3µm unter die Mischung gerührt. Anschließend wird die so erhaltene Mischung in eine vorbehandelte Glaskartusche (3mm i.d., 12.5 cm Länge) gefüllt und über Nacht im Wasserbad gehalten. In dieser Zeit ist der monolithische Formkörper fest auspolymerisiert. Er wird anschließend in einem Trockenschrank über 2 Tage getrocknet und dann direkt für die Chromatographie eingesetzt. Hierzu wurde die Kartusche an eine HPLC-Anlage angeschlossen und zunächst über Nacht mit ca. 200ml Ethanol (Flussrate: 0.2ml/ Min) eingespült. Dabei wurde der verbliebene Porenbildner (Polyethylenglykol) herausgespült. Es konnten 2 Substanzen getrennt werden. Anschließend wurde die Kartusche nachträglich bei 300°C (ca. 4 Stunden) calciniert, um restliches PEG herauszubrennen. Die erneute chromatographische Testung ergab wiederum eine Auftrennung von zwei Substanzen, bei deutlich besserer Trennleistung.

Die Glaskartusche wurde vor der Befüllung mit der Reaktionsmischung vorbehandelt. Glaskartuschen wurden in 1 M HCl-Lösung gegeben und mind. 24 Std. bei 40°C behandelt. Anschließend wurden die Rohre mit Wasser und Ethanol gespült und 24 Std. im Trockenschrank getrocknet.

### Beispiel 2

In ein Reaktionsgefäss werden 100ml 0.01 N Essigsäure vorgelegt und unter Rühren 10.2g PEG (Polyethylenglykol) und 9.0g Harnstoff gelöst. Die Lösung wird im Eisbad auf 4°C gekühlt. Beim Erreichen von 4°C werden 50ml TMOS unter Rühren zugegeben. Die Lösung wird weitere 30 Minuten bei 4°C gerührt. Anschließend wird die Lösung in einem Wasserbad auf 30°C erwärmt. Nach 14 Minuten werden 5g eines Aerosils (Aerosil OX50, Firma Degussa) mit einer Größe von 40nm unter die Mischung gerührt. Anschließend wird die so erhaltene Mischung in vorbehandelte Glaskartuschen (3mm i.d., 12.5 cm Länge) gefüllt und über Nacht im Wasserbad bei 30°C gehalten. In dieser Zeit ist der monolithische Formkörper fest auspolymerisiert. Er wird anschließend in einem Trockenschrank über 2 Tage getrocknet und dann direkt für die Chromatographie eingesetzt. Der Monolith sitzt fest in der Glaskartusche und lässt sich nicht mehr entfernen.

Die Glaskartuschen wurden vor der Befüllung mit der Reaktionsmischung vorbehandelt. Hierzu wurden 3 Varianten gewählt:
a) 5% TMOS (Tetramethoxysilan)
b) 5% BTME (Bis(trimethoxysliyl)ethan)
c) 5% Glymo (3-Glycidoxypropyltrimethoxysilan)

Es wurden jeweils 5%ige Lösungen von a) -c) in Toluol hergestellt. In diese wurden die Glaskartuschen getaucht und unter Rückfluss über Nacht gekocht. Anschließend wurden die Rohre mit Ethanol gespült und 24 Std. im Trockenschrank getrocknet.

### Beispiel 3

In ein Reaktionsgefäss werden 100ml 0.01 N Essigsäure vorgelegt und unter Rühren 6.2g PEG (Polyethylenglykol) und 10.0g Harnstoff gelöst. Die Lösung wird im Eisbad auf 4°C gekühlt. Beim Erreichen von 4°C werden 37.5ml TMOS und 12.5ml MTMS (Vol.-Verhältnis 3:1) unter Rühren zugegeben. Die Lösung wird weitere 30 Minuten bei 4°C gerührt. Anschließend wird die Lösung in einem Wasserbad auf 30°C erwärmt und noch ca. 30 Minuten gerührt. Dann werden 1g eines Aerosils (Aerosil OX50, Firma Degussa) mit einer Größe von 40nm bzw. in einem zweiten Versuch 3g Partikel Monospher^{®} 500 (monodisperse, nicht poröse Teilchen, 500nm, Fa. Merck KGaA) unter die Mischung gerührt. Anschließend wird die Mischung zur besseren Verteilung der Partikel mit einem Dispergierer (Diax 900) behandelt. Die resultierenden Mischungen werden in die vorbehandelten Glaskartuschen (3mm i.d., 12.5 cm Länge) gefüllt und über Nacht im Wasserbad bei 30°C gehalten. In dieser Zeit ist der monolithische Formkörper fest auspolymerisiert. Er wird anschließend in einem Trockenschrank über 2 Tage getrocknet. Der Monolith sitzt fest in der Glaskartusche und lässt sich nicht mehr entfernen.

Die Glaskartuschen wurden vor der Befüllung mit der Reaktionsmischung wie unter Beispiel 2 beschrieben vorbehandelt. Hierzu wurden 3 Varianten gewählt:
a) 5% TMOS (Tetramethoxysilan)
b) 5% BTME (Bis(trimethoxysilyl) ethan)
c) 5% Glymo (3-Glycidoxypropyltrimethoxysilan)

Es wurden jeweils 5%ige Lösungen von a) -c) in Toluol hergestellt. In diese wurden die Glaskartuschen getaucht und unter Rückfluss über Nacht gekocht. Anschließend wurden die Rohre mit Ethanol gespült und 24 Std. im Trockenschrank getrocknet.

### Beispiel 4

In ein Reaktionsgefäss werden 100ml 0.01 N Essigsäure vorgelegt und unter Rühren 6.2g PEG (Polyethylenglykol) und 10.0g Harnstoff gelöst. Die Lösung wird im Eisbad auf 4°C gekühlt. Beim Erreichen von 4°C werden 37.5ml TMOS und 12.5ml MTMS (Vol.-Verhältnis 3:1) unter Rühren zugegeben. Die Lösung wird weitere 30 Minuten bei 4°C gerührt. Anschliessend wird die Lösung in einem Wasserbad auf 30°C erwärmt und noch 14 Minuten gerührt. Dann werden 1 g sphärische, poröse Silikapartikel mit einer Größe von 0.1 - 3µm (Purospher^{®}STAR <3µm, Fa. Merck KGaA) bzw. in einem zweiten Versuch 3g Partikel Monospher^{®} 500 (monodisperse, nicht poröse Teilchen, 500nm, Fa. Merck KGaA) unter die Mischung gerührt. Anschließend werden die so erhaltenen Mischungen in vorbehandelte Glaskartuschen (3mm i.d., 12.5 cm Länge) gefüllt und über Nacht im Wasserbad bei 30°C gehalten. In dieser Zeit ist der monolithische Formkörper fest auspolymerisiert. Er wird anschließend in einem Trockenschrank über 2 Tage getrocknet. Der Monolith sitzt fest in der Glaskartusche und lässt sich nicht mehr entfernen.

Die Glaskartuschen wurden vor der Befüllung mit der Reaktionsmischung wie unter Beispiel 2 beschrieben vorbehandelt. Hierzu wurden 3 Varianten gewählt:
a) 5% TMOS (Tetramethoxysilan)
b) 5% BTME (Bis(trimethoxysilyl) ethan)
c) 5% Glymo (3-Glycidoxypropyltrimethoxysilan)

Es wurden jeweils 5%ige Lösungen von a) -c) in Toluol hergestellt. In diese wurden die Glaskartuschen getaucht und unter Rückfluss über Nacht gekocht. Anschließend wurden die Rohre mit Ethanol gespült und 24 Std. im Trockenschrank getrocknet.

## Patentansprüche

1. Verfahren zur Herstellung von monolithischen porösen Formkörpern, die ihre Gelierform vollständig ausfüllen, nach einem Sol-Gel Prozess, **gekennzeichnet durch** folgende Verfahrensschritte:
a) Bereitstellen einer Gelierform aus Glas, mit Glas beschichtetem Edelstahl oder Fused Silica mit einem Innendurchmesser zwischen 50 µm und 100 mm;
b) Aktivierung der Gelierform **durch**
Anätzen
und/oder Vergrößerung der Oberfläche mit Tetraalkoxysilanen und/oder Organoalkoxysilanen, in denen eine Alkoxygruppe eines Tetraalkoxysilans **durch** C1 bis C20 Alkyl, C2 bis C20 Alkenyl oder C5 bis C20 Aryl ersetzt ist,
und/oder chemische Modifikation mit bis-funktionellen Silanen der Formel I;
(RO)₁₋₃-Si-(CH₂)n-Si-(OR)₁₋₃ I
wobei R C1 bis C20 Alkyl, C2 bis C20 Alkenyl oder C5 bis C20 Aryl und n 1 bis 8 ist
oder mit mono, di- oder trifunktionellen Alkoxysilanen mit einer vierten endständigen Funktion der Formel II
(RO)ₙR'ₘSi-R* II
wobei m 0, 1 oder 2 ist und n + m 3 ergibt,
R und R' unabhängig voneinander ein C1 bis C8 Alkylrest ist und
R* eine Amino- oder eine Epoxy-Gruppe aufweist,
c) Befüllen der Gelierform mit Monomersol;
d) Polymerisieren des Monomersols und Altern des entstandenen Gels zur Bildung von Poren,
wobei in Schritt c) ein Monomersol verwendet wird, das Silica-Partikel und/oder Glaskeramik- oder Glasfasern und/oder Organoalkoxysilane enthält.

2. Verfahren nach Anspruch 1, **dadurch gekennzeichnet, dass** in Schritt b) die Aktivierung durch Vergrößerung der Innenoberfläche der Gelierform erfolgt, indem die Innenoberfläche mit Alkoxysilanen und/oder Organoalkoxysilanen oder Aufschlämmungen von Partikeln behandelt wird.

3. Monolithische poröse Formkörper, die in ihre Gelierform einpolymerisiert sind, herstellbar nach dem Verfahren entsprechend einem oder mehrerer der Ansprüche 1 bis 3.

4. Verwendung der Formkörper nach Anspruch 4 zur chromatographischen Auftrennung mindestens zweier Substanzen.

## Claims

1. Process for the production of monolithic porous mouldings which completely fill their gelling mould, by a sol-gel process, **characterised by** the following process steps:
a) provision of a gelling mould made from glass, glass-coated stainless steel or fused silica having an internal diameter of between 50 µm and 100 mm;
b) activation of the gelling mould by
surface etching
and/or increasing the surface area using tetraalkoxysilanes and/or organoalkoxysilanes in which one alkoxy group of a tetraalkoxysilane has been replaced by C1 to C20 alkyl, C2 to C20 alkenyl or C5 to C20 aryl,
and/or chemical modification using bisfunctional silanes of the formula I;
(RO)₁₋₃-Si-(CH₂)ₙ-Si-(OR)₁₋₃ I
where R is C1 to C20 alkyl, C2 to C20 alkenyl or C5 to C20 aryl, and n is 1 to 8,
or using mono-, di- or trifunctional alkoxysilanes having a fourth terminal function, of the formula II
(RO)ₙR'ₘSi-R* II
where m is 0, 1 or 2 and n + m gives 3,
R and R', independently of one another, are a C1 to C8 alkyl radical, and R* contains an amino or epoxy group,
c) filling of the gelling mould with monomer sol;
d) polymerisation of the monomer sol and ageing of the resultant gel for the formation of pores,
where a monomer sol which comprises silica particles and/or glass-ceramic fibres or glass fibres and/or organoalkoxysilanes is used in step c).

2. Process according to Claim 1, **characterised in that** the activation in step b) is carried out by increasing the inside surface area of the gelling mould by treating the inside surface with alkoxysilanes and/or organoalkoxysilanes or slurries of particles.

3. Monolithic porous mouldings which have been polymerised into their gelling mould and which can be produced by the process corresponding to one or more of Claims 1 and 2.

4. Use of the mouldings according to Claim 3 for the chromatographic separation of at least two substances.

## Revendications

1. Procédé pour la production de moulages poreux monolithiques qui remplissent complètement leur moule de gélification, par un procédé sol-gel, **caractérisé par** les étapes de procédé suivantes :
a) fourniture d'un moule de gélification réalisé à partir de verre, d'acier inoxydable revêtu de verre ou de silice fondue ayant un diamètre interne entre 50 µm et 100 mm ;
b) activation du moule de gélification par gravure de surface et/ou augmentation de l'aire de surface en utilisant des tétraalcoxysilanes et/ou des organoalcoxysilanes dans lequel un groupe alcoxy d'un tétra-alcoxysilane a été remplacé par C1 à C20 alkyle, C2 à C20 alkényle ou C5 à C20 aryle,
et/ou modification chimique en utilisant des silanes bifonctionnels de la formule I ;
(RO)₁₋₃-Si-(CH₂)ₙ-Si-(OR)₁₋₃ I
dans laquelle R est C1 à C20 alkyle, C2 à C20 alkényle ou C5 à C20 aryle, et n est 1 à 8,
ou en utilisant des alcoxysilanes mono-, di- ou trifonctionnels ayant une fonction de quatrième terminal, de la formule II
(RO)ₙR'ₘSi-R* II
dans laquelle m est 0, 1 ou 2 et n + m donne 3,
R et R', indépendamment l'un de l'autre, sont un radical C1 à C8 alkyle, et R* contient un groupe amino ou époxy,
c) remplissage du moule de gélification avec un sol monomère ;
d) polymérisation du sol monomère et vieillissement du gel résultant pour la formation de pores,
dans lequel un sol monomère qui comprend des particules de silice et/ou des fibres de verre-céramique ou des fibres de verre et/ou des organoalcoxysilanes est utilisé dans l'étape c).

2. Procédé selon la revendication 1, **caractérisé en ce que** l'activation dans l'étape b) est mise en oeuvre par augmentation de l'aire de surface interne du moule de gélification par traitement de la surface interne avec des alcoxysilanes et/ou des organoalcoxysilanes ou des boues de particules.

3. Moulages poreux monolytiques qui ont été polymérisés dans leur moule de gélification et qui peuvent être produits par le procédé correspondant à une ou plusieurs des revendications 1 et 2.

4. Utilisation des moulages selon la revendication 3 pour la séparation chromatographique d'au moins deux substances.
